# EUROPÄISCHE PATENTSCHRIFT

(11) **EP 1 055 831 B1**
(45) Veröffentlichungstag und Bekanntmachung des Hinweises auf die Patenterteilung: **24.11.2004**
(21) Anmeldenummer: 00810357.4
(22) Anmeldetag: 26.04.2000
(51) Int. Cl.: F16C 11/10, F16M 11/14

(54) **Schienenfuss für ein Diamantschneidesystem**
Rail foot for a diamond cutting system
Patin de rail pour système de coupe de diamant

(30) Priorität: 07.05.1999 DE 19921148
(43) Veröffentlichungstag der Anmeldung: 29.11.2000
(73) Patentinhaber: HILTI Aktiengesellschaft, 9494 Schaan (LI)
(72) Erfinder: Schittl, Josef, 6712 Thüringen (AT); Sever, Eduard, 6700 Bludenz (AT); Gmeiner, Markus, 6800 Feldkirch (AT)
(74) Vertreter: Wildi, Roland

(56) Entgegenhaltungen:
- WO-A-90/14031
- DE-A- 2 112 431
- DE-U- 9 301 268
- FR-A- 2 548 746
- US-A- 4 515 336
- US-A- 4 796 508

## Beschreibung

Die Erfindung betrifft einen Schienenfuss gemäss dem Oberbegriff des Patentanspruchs 1.

Aus der DE-33 44 064 ist ein gattungsgemäßes Befestigungselement mit einem Grundelement, einem Klemmelement, einer Kugel und einem mit der Kugel in Verbindung stehenden Verbindungselement bekannt. Das Grundelement liegt mit einer Auflagefläche auf einer Grundplatte und ist an dieser mittels zweier Schrauben befestigt. Die Grundplatte selbst liegt auf der Oberfläche eines Bodens. Auf jener Seite, die der Auflagefläche gegenüberliegt, weist die Grundplatte einen Vorsprung auf, der eine halbkugelförmige Aufnahmeöffnung und an der Aussenkontur ein Aussengewinde aufweist. Dieses Aussengewinde wirkt formschlüssig mit einem Innengewinde des Klemmelementes zusammen. Das Klemmelement weist im Innern ein scheibenförmiges Lagerelement auf, dessen Durchgangsbohrung eine auf die Aussenkontur der Kugel abgestimmte Geometrie aufweist. Die Kugel liegt in der Aufnahmeöffnung des Grundelementes und ist mit Hilfe des Klemmelementes über das scheibenförmige Lagerelement, durch ein Verdrehen des Klemmelementes gegenüber dem Grundelement festklemmbar.

Entgegen der Auflagefläche des Grundelementes ragt von der Kugel ein Verbindungselement in Form eines Gewindebolzens ab, der in ein entsprechend ausgebildetes Aufnahmegewinde an der Stirnseite einer Führungsschiene ragt.

Eine Verdrehung der Führungsschiene in einer Ebene, die parallel bzw. geneigt zu einer Ebene verläuft, in der sich die Auflagefläche erstreckt ist bei diesem bekannten Befestigungselement nur möglich, wenn die Klemmverbindung zwischen der Kugel, dem Grundelement und dem Klemmelement gelöst wird, sodass sich die Kugel gegenüber dem Grundelement bzw. Klemmelement frei drehen bzw. schwenken lässt.

Der Erfindung liegt die Aufgabe zugrunde, ein sicher und einfach zu bedienendes Befestigungselement zu schaffen, bei dem die an dem Verbindungselement festlegbare Führungsschiene in einer Ebene geschwenkt werden kann, die parallel bzw. unter einem Winkel zu einer Ebene verläuft, in der sich die Auflagefläche des Grundelementes erstreckt, ohne dass eine voreingestellte senkrechte Ausrichtung bzw. Neigung des Verbindungselementes gegenüber der Auflagefläche verlorengeht.

Die erfindungsgemässe Ausgestaltung des Befestigungselementes macht es möglich, dass einerseits die mit dem Verbindungselement zusammenwirkende Kugel festklemmbar ist, andererseits aber das Verbindungselement trotzdem noch gegenüber der Kugel verdreht werden kann. Auf diese Weise wird erreicht, dass eine mit dem Verbindungselement in Verbindung stehende Führungsschiene in einer Ebene geschwenkt werden kann, die parallel oder unter einem Winkel zu der von den Auflageflächen gebildeten Ebene verläuft, ohne dass die Verbindung zwischen der Kugel, dem Grundelement und dem Klemmelement gelöst werden muss.

Aus herstelltechnischen Gründen ist vorteilhafterweise die Lagerstelle von einem im wesentlichen zylindrischen Abschnitt und das Gegenlager von einer im wesentlichen zylindrischen Bohrung gebildet.

Damit eine schnelle Verbindung zwischen dem Befestigungselement und beispielsweise einer Führungsschiene erreicht werden kann weist vorzugsweise das Verbindungselement an einem der Lagerstelle gegenüberliegenden Endbereich einen Exzenter auf, dessen exzentrische Querschnittsfläche senkrecht zur Mittellängsachse der Lagerstelle verläuft.

Um eine Klemmverbindung zwischen dem Exzenter und beispielsweise einer Führungsschiene mit wenig Kraftaufwand erreichen zu können, weist zweckmässigerweise das Verbindungselement zwischen der Lagerstelle und dem Exzenter einen drehfest mit dem Verbindungselement in Verbindung stehenden, seitlich von dem Verbindungselement abragenden Schwenkarm auf. Dieser Schwenkarm wirkt drehschlüssig mit dem Exzenter zusammen.

Um den in einem Bauteil, insbesondere einer Führungsschiene, festgeklemmten Exzenter gegenüber dem Bauteil bzw. der Führungsschiene verriegeln zu können, ist vorteilhafterweise das freie Ende des Schwenkarmes parallel zur Mittellängsachse der Lagerstelle in einer von dem Grundelement abgewandten Richtung abgebogen und mit einer Verriegelungskontur versehen ist, die formschlüssig mit dem Bauteil bzw. der Führungsschiene in Verbindung bringbar ist.

Um ein ausreichendes elastisches Verhalten des Schwenkarmes erreichen zu können, das notwendig ist um das abgebogene freie Ende beim Verriegeln des Exzenters formschlüssig mit dem Bauteil bzw. der Führungsschiene in Verbindung bringen zu können überragt vorteilhafterweise das freie Ende des Schwenkarmes die Aussenkontur des Grundelementes.

Zum Zwecke einer senkrechten Ausrichtung des Gegenlagers gegenüber einer von den Auflageflächen gebildeten Ebene ist zweckmässigerweise die Kugel, in einer Ebene, die senkrecht zur Mittellängsachse des Gegenlagers verläuft und in der die Kugel die grösste Querschnittsfläche aufweist, an der Aussenkontur mit einer umlaufenden Vertiefung versehen, in die ein Teil einer im wesentlichen tangential zur Vertiefung angeordneten Drehachse versetzbar ist, die das Klemmelement sowie das Grundelement schwenkbar miteinander verbindet. Die Kugel ist auf diese Weise gegenüber dem Grundelement und dem Klemmelement fixiert.

Jener Bereich der Drehachse, der in die Vertiefung versetzbar ist, weist eine einseitige Ausnehmung auf. Durch ein Drehen der Drehachse ist die Ausnehmung zur Vertiefung hin ausrichtbar, sodass die Drehachse nicht mehr formschlüssig mit der Kugel in Verbindung steht. Auf diese Weise kann die Kugel und somit das Verbindungselement in eine Position verschwenkt werden, in der die Mittellängsachse des Gegenlagers nicht mehr senkrecht zu einer von den Auflageflächen gebildeten Ebene verläuft.

Die Erfindung wird anhand von Zeichnungen, die ein Ausführungsbeispiel wiedergeben näher erläutert. Es zeigen:
- Fig.1: einen erfindungsgemässes Befestigungselement;
- Fig. 2: einen Schnitt durch das Befestigungselement gemäss Fig. 1 und 3 entlang der Linie II-II;
- Fig. 3: eine Draufsicht auf das Befestigungselement gemäss Fig. 1 und 2.

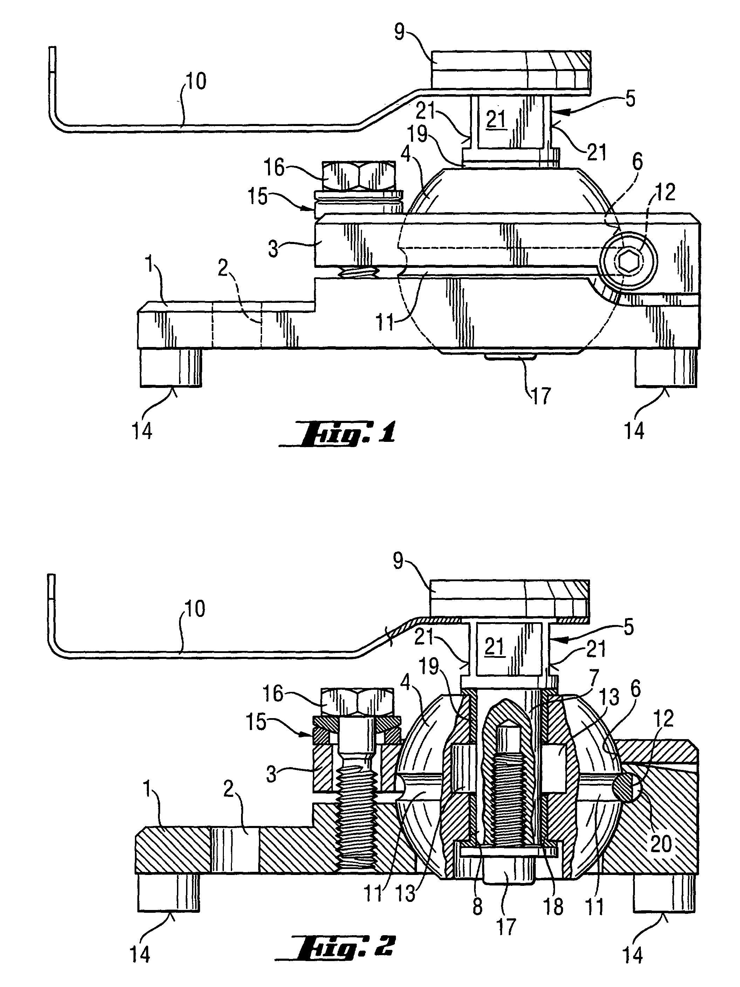

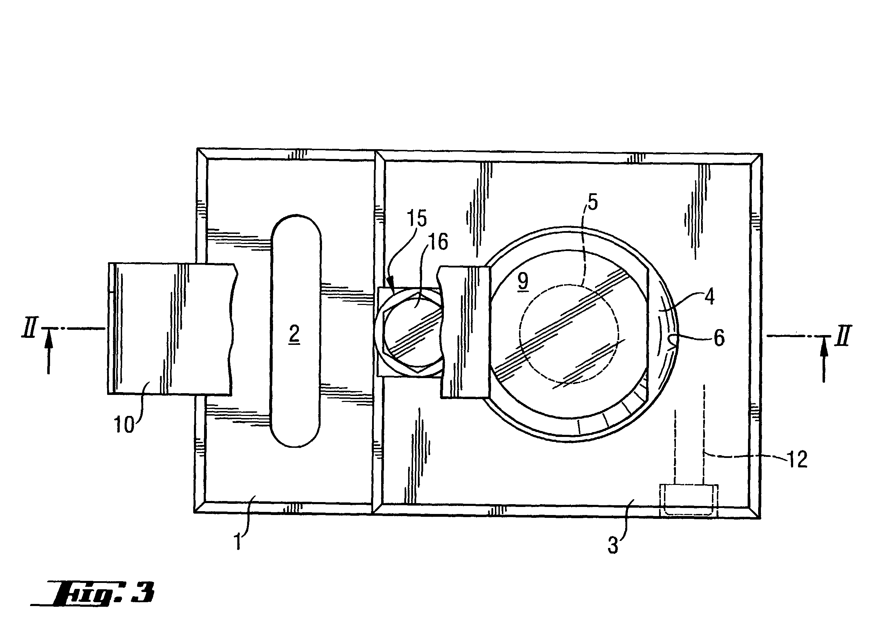

Das in den Fig. 1 bis 3 dargestellte Befestigungselement dient der Festlegung von nicht dargestellten Führungsschienen an der Oberfläche eines Untergrundes, der mit ebenfalls nicht dargestellten Werkzeugen bearbeitet wird, die entlang der Führungsschiene verschiebbar sind.

Das Befestigungselement weist ein Grundelement 1 auf, das zur besseren Auflage auf der Oberfläche eines nicht dargestellten Bauteiles mit Auflageelementen versehen ist, die Auflageflächen 14 aufweisen. An dem Grundelement 1 sind beispielsweise 4 Auflageelemente angeordnet, von denen allerdings nur zwei sichtbar sind. Das Grundelement 1 kann beispielsweise auch nur mit drei Auflageelemente ausgestattet sein, sodass eine sogenannte "Dreipunkt-Auflage" erreicht werden kann. Der Festlegung des Grundelementes 1 an der Oberfläche des zu bearbeitenden Untergrundes dient eine nicht dargestellte Befestigungsschraube, die ein Langloch 2 in dem Grundelement 1 durchsetzt und in eine ebenfalls nicht dargestellte vorbereitete Aufnahmebohrung im Untergrund eindrehbar ist.

Auf einer den Auflageflächen 14 gegenüberliegenden Seite weist das Grundelement 1 eine im wesentlichen halbkugelförmig ausgebildete Aufnahmeöffnung 6 auf, die sich in Richtung der Auflageflächen 14 verjüngt und in der eine Kugel 4 angeordnet ist. Ein mit der Kugel 4 zusammenwirkendes, mit dem Grundelement 1 in Verbindung stehendes Klemmelement 3 dient der Festklemmung der Kugel 4 zwischen dem Grundelement 1 und dem Klemmelement 3. Das Klemmelement 3 weist ebenfalls wie das Grundelement 1 eine halbkugelförmige Aufnahmeöffnung 6 auf, die sich in einer von den Auflageflächen 14 abgewandten Richtung verjüngt. Das Klemmelement 3 und das Grundelement 1 sind mittels einer Drehachse 12 schwenkbar miteinander verbunden, deren Mittellängsachse parallel zu den Auflageflächen 14 verläuft. Auf die genaue Lage dieser Drehachse wird in einem später folgenden Abschnitt näher eingegangen.

Mit Hilfe einer Schraube 16, die eine Durchgangsbohrung des Klemmelementes 3 durchsetzt und in eine, ein Gegengewinde aufweisende Aufnahmebohrung des Grundelementes 1 eindrehbar ist, lässt sich das Spiel zwischen den halbkreisförmigen Aufnahmeöffnungen 6 des Grundelementes 1 und des Klemmelementes 3 und der Aussenkontur der Kugel 4 aufheben, sodass die Kugel 4 zwischen dem Grundelement 1 und dem Klemmelement 3 festgeklemmt wird.

Zwischen einem Kopf der Schraube 16 und einer von den Auflageflächen 14 abgewandten Oberfläche des Klemmelementes 3 ist beispielsweise ein aus zwei Scheiben bestehendes Ausgleichselement 15 angeordnet. Mit Hilfe dieses Ausgleichselementes 15 wird eine gute Abstützung des Kopfes der Schraube 16 an dem Klemmelement 3 selbst dann gewährleistet, wenn das Klemmelement 3 gegenüber einer von den Auflageflächen 14 gebildeten Ebene geneigt angeordnet ist.

Die Kugel 4 weist ein Gegenlager 8 in Form einer zylindrischen Durchgangsbohrung auf, die sich in Richtung der Auflageflächen 14 stufenförmig erweitert. Von zwei einander gegenüberliegenden Seiten ragt jeweils eine, mit einem flanschartigen Bund versehene Lagerbuchse 18, 19 in jenen Teil der Durchgangsbohrung, der den kleineren Durchmesser aufweist. Zwischen den voneinander beabstandeten Lagerbuchsen weist die Durchgangsbohrung eine zustätzliche radiale Erweiterung in Form einer Hinterschneidung 13 auf. Die Lagerbuchsen 18, 19 dienen der Lagerung eines Verbindungselementes 5, das mit einer Lagerstelle 7 beide Lagerbuchsen 18, 19 durchsetzt, wobei das freie Ende der Lagerstelle 7 und der stufenförmige Übergang der Durchgangsbohrung 8 in der gleichen Ebene liegen.

Vom freien Ende der Lagerstelle 7 aus erstreckt sich eine Gewindebohrung in das Verbindungselement 5, in die eine Schraube 17 eingedreht ist, deren Kopf sich unter Zwischenlage einer Beilagscheibe an einer, von dem stufenförmigen Übergang der Durchgangsbohrung gebildeten, den Auflageflächen 14 zugewandten, kreisringförmigen Anschlagfläche abstützt. Der Aussendurchmesser der Lagerstelle 7 entspricht dem Innendurchmesser der Lagebuchsen 18, 19 und der Aussendurchmesser der Lagerbuchsen 18, 19 entspricht dem kleineren Durchmesser der die Kugel 4 zentral durchsetzenden Durchgangsbohrung.

An einem, der Lagerstelle 7 gegenüberliegenden freien Endbereich des Verbindungselementes 5 befindet sich ein Exzenter 9, dessen exzentrische Querschnittsfläche in einer senkrecht zur Mittellängsachse der Lagerstelle 7 verlaufenden Ebene liegt. Der Exzenter 9 weist zwei voneinander beabstandete parallel zueinander und parallel zur Mittellängsachse der Lagerstelle 7 verlaufende, gerade Seitenflächen auf.

In Richtung Auflageflächen 14 schliesst sich direkt an den Exzenter 9 ein Schwenkhebel 10 an, dessen freies Ende in einer von den Auflageflächen 14 abgewandten Richtung rechtwinklig abgebogen ist. Dieses abgebogene freie Ende des Schwenkhebels 10 ist beispielsweise mit einer nicht näher dargestellten Verriegelungskontur versehen, mit deren Hilfe der Exzenter 9 in einer nicht dargestellten Führungsschiene in der geklemmten Stellung verriegelbar ist, indem die Verriegelungskontur formschlüssig mit der Führungsschiene zusammenwirkt.

Direkt an den Schwenkhebel 10 schliesst sich eine Schlüsselweite 21 an, über die das gesamte Verbindungselement 5 mit einem geeigneten, nicht dargestellten Gabelschüssel verdrehbar ist.

Die Kugel 4 weist in einer Ebene, die senkrecht zur Mittellängsachse des Gegenlagers 8 verläuft und in der die Kugel 4 die grösste Querschnittsfläche aufweist, eine umlaufend ausgebildete Vertiefung 11 an der Aussenkontur auf.

Eine das Grundelement 1 und das Klemmelement 3 schwenkbar miteinander verbindende Drehachse 12 erstreckt sich im wesentlichen tangential zu der Vertiefung 11 an der Kugel 4 und parallel zu den Auflageflächen 14 durch das Grundelement 1 sowie das Klemmelement 3 und ragt seitlich in die Vertiefung 11 der Kugel 4. Durch das Zusammenwirken der Drehachse 12 mit der Vertiefung 11 in der Kugel 4, wird gewährleistet, dass das Gegenlager 8 immer in einer senkrechten Position gegenüber einer von den Auflageflächen 14 gebildeten Ebene verbleibt, selbst dann, wenn das Verbindungselement 5 gegenüber der Kugel 4 verdreht wird.

Jener Bereich der Drehachse 12, der in die Vertiefung 11 ragt, ist mit einer einseitigen Ausnehmung 20 versehen. Durch ein Drehen der Drehachse 12 ist die Ausnehmung 20 zur Vertiefung 11 hin ausrichtbar, sodass die Drehachse 12 nicht mehr in diese Vertiefung 11 ragt. Auf diese Weise kann nun die Kugel 4 in eine Position verschwenkt werden, in der die Mittellängsachse des Gegenlagers 8 nicht mehr senkrecht zu einer von den Auflageflächen 14 gebildeten Ebene verläuft.

## Patentansprüche

1. Befestigungselement mit einem eine Auflagefläche (14) aufweisenden Grundelement (1), einem Klemmelement (3) und einer zwischen dem Grundelement (1) und dem Klemmelement (3) festklemmbaren Kugel (4), wobei die Kugel (4), die mit einem Verbindungselement (5) versehen ist, eine halbkugelförmige Durchtrittsöffnung (6) des Klemmelementes (3), deren Mittellängsachse senkrecht zur Auflagefläche (14) verläuft, durchsetzt, **dadurch gekennzeichnet, dass** das Verbindungselement (5) gegenüber der Kugel (4) verdrehbar ist, indem das Verbindungselement (5) an einem dem Grundelement (1) zugewandten, ersten Endbereich eine Lagerstelle (7) aufweist, die in ein zentrales Gegenlager (8) der Kugel (4) ragt.

2. Befestigungselement nach Anspruch 1, **dadurch gekennzeichnet, dass** die Lagerstelle (7) von einem im wesentlichen zylindrischen Abschnitt und das Gegenlager (8) von einer im wesentlichen zylindrischen Bohrung gebildet ist.

3. Befestigungselement nach Anspruch 1 oder 2, **dadurch gekennzeichnet, dass** das Verbindungselement (5) an einem der Lagerstelle (7) gegenüberliegenden Endbereich einen Exzenter (9) aufweist, dessen exzentrische Querschnittsfläche senkrecht zur Mittellängsachse der Lagerstelle (8) verläuft.

4. Befestigungselement nach Anspruch 3, **dadurch gekennzeichnet, dass** das Verbindungselement (5) zwischen der Lagerstelle (7) und dem Exzenter (9) einen drehfest mit dem Verbindungselement (5) in Verbindung stehenden, seitlich von dem Verbindungselement (5) abragenden Schwenkarm (10) aufweist.

5. Befestigungselement nach Anspruch 3, **dadurch gekennzeichnet, dass** das freie Ende des Schwenkarmes (10) parallel zur Mittellängsachse der Lagerstelle (7) in einer von dem Grundelement (1) abgewandten Richtung abgebogen ist.

6. Befestigungselement nach Anspruch 5, **dadurch gekennzeichnet, dass** das freie Ende des Schwenkarmes (10) die Aussenkontur des Grundelementes (1) überragt.

7. Befestigungselement nach einem der Ansprüche 1 bis 6, **dadurch gekennzeichnet, dass** die Kugel (4) in einer Ebene, die senkrecht zur Mittellängsachse des Gegenlagers (8) verläuft und in der die Kugel (4) die grösste Querschnittsfläche aufweist, an der Aussenkontur mit einer umlaufenden Vertiefung (11) versehen ist in die ein Teil einer im wesentlichen tangential zur Vertiefung (11) angeordneten Drehachse (12) des Grundelementes (1) versetzbar ist.

## Claims

1. Fixing element comprising a base element (1) with a seating surface (14), a clamping element (3) and a ball (4) which is clamped between the base element (1) and the clamping element (3), and the ball (4), which is provided with a connecting element (5), passes through a semi-spherical passage (6) of the clamping element (3) the central longitudinal axis of which extends perpendicularly to the seating surface (14), **characterised in that** the connecting element (5) can be rotated relative to the ball (4), **in that** the connecting element (5) has in a first end area, which is oriented towards the base element (1), a mounting point (7) which intrudes into a central counter mount (8) of the ball (4).

2. Fixing element according to Claim 1, **characterised in that** the mounting point (7) is formed by an essentially cylindrical section, and the counter mount (8) is formed by an essentially cylindrical bore.

3. Fixing element according to Claim 1 or 2, **characterised in that** the connecting element (5) comprises in an end area opposite the mounting point (7) an eccenter (9) the eccentric cross-sectional surface of which extends perpendicularly to the central longitudinal axis of the mounting point (8).

4. Fixing element according to Claim 3, **characterised in that** the connecting element (5) between the mounting point (7) and the eccenter (9) comprises a pivotal arm (10) which is non-rotary connected to the connecting element (5) and laterally projects from the connecting element (5).

5. Fixing element according to Claim 3, **characterised in that** the free end of the pivotal arm (10) is parallel to the central longitudinal axis of the mounting point (7) bent in a direction facing away from the base element (1).

6. Fixing element according to Claim 5, **characterised in that** the free end of the pivotal arm (10) protrudes over the outside contour of the base element (1).

7. Fixing element according to one of Claims 1 to 6, **characterised in that** the ball (4) is, at a level which extends perpendicularly to the central longitudinal axis of the counter mount (8) and wherein the ball (4) has the largest cross-sectional surface, provided at the counter contour with a peripheral recess (11) into which is transposable a part of a rotary axis (12) of the base element (1) which is essentially arranged tangentially to the recess (11 ).

## Revendications

1. Élément de fixation avec un élément de base (1) comportant une surface d'appui (14), avec un élément de serrage (3) et avec une bille (4) à bloquer par serrage entre l'élément de base (1) et l'élément de serrage (3), la bille (4), qui est munie d'un élément de liaison (5), traversant un orifice débouchant hémisphérique (6) de l'élément de serrage (3) dont l'axe longitudinal médian s'étend perpendiculairement à la surface d'appui (14), **caractérisé en ce que** l'élément de liaison (5) peut tourner par rapport à la bille (4) par le fait que l'élément de liaison (5) comporte, sur une première zone d'extrémité tournée vers l'élément de base (1), un point d'appui (7) qui pénètre dans un contre-appui central (8) de la bille (4).

2. Élément de fixation selon la revendication 1, **caractérisé en ce que** le point d'appui (7) est formé par une portion sensiblement cylindrique, et le contre-appui (8) est formé par un trou sensiblement cylindrique.

3. Élément de fixation selon la revendication 1 ou 2, **caractérisé en ce que** l'élément de liaison (5) comporte, dans une zone d'extrémité située à l'opposé du point d'appui (7), un excentrique (9) dont la section transversale excentrique s'étend perpendiculairement à l'axe longitudinal médian du point d'appui (8).

4. Élément de fixation selon la revendication 3, **caractérisé en ce que** l'élément de liaison (5) comporte, entre le point d'appui (7) et l'excentrique (9), un bras pivotant (10) qui est solidarisé en rotation à l'élément de liaison (5) et qui dépasse latéralement de l'élément de liaison (5).

5. Élément de fixation selon la revendication 3, **caractérisé en ce que** l'extrémité libre du bras pivotant (10) est repliée parallèlement à l'axe longitudinal médian du point d'appui (7) dans une direction orientée à l'opposé de l'élément de base (1).

6. Élément de fixation selon la revendication 5, **caractérisé en ce que** l'extrémité libre du bras pivotant (10) dépasse du contour extérieur de l'élément de base (1).

7. Élément de fixation selon une des revendications 1 à 6, **caractérisé en ce que**, dans un plan qui s'étend perpendiculairement à l'axe longitudinal médian du contre-appui (8) et dans lequel la bille (4) présente la section transversale -maximale, la bille (4) est pourvue, sur le contour extérieur, d'un renfoncement périphérique (11) dans lequel peut s'engager une partie d'un axe de rotation (12) de l'élément de base (1) disposé sensiblement tangentiellement au renfoncement (11).
